# EUROPEAN PATENT SPECIFICATION

(11) **EP 2 107 528 B1**
(45) Date of publication and mention of the grant of the patent: **26.12.2012**
(21) Application number: 08163986.6
(22) Date of filing: 09.09.2008
(51) Int. Cl.: G06T 11/20

(54) **Method of and arrangement for rendering a path**
Verfahren und Anordnung zur Darstellung eines Pfads
Procédé et agencement pour le rendu d'un chemin

(30) Priority: 01.04.2008 US 41271 P
(43) Date of publication of application: 07.10.2009
(73) Proprietor: Telefonaktiebolaget L M Ericsson (PUBL), 164 83 Stockholm (SE)
(72) Inventor: Persson, Per, 247 34 Södra Sandby (SE)
(74) Representative: Åkerman, Mårten Lennart

(56) References cited:
- EP-A- 1 630 745
- US-A1- 2002 105 515
- US-B1- 6 340 981
- LOOP C ET AL: "Resolution independent curve rendering using programmable graphics hardware" ACM TRANSACTIONS ON GRAPHICS, ACM, US, vol. 24, no. 3, 1 July 2005 (2005-07-01), pages 1000-1009, XP002439900 ISSN: 0730-0301
- PETZOLD C.: "Foundations: 3D-Text in WPF" MSDN MAGAZINE, [Online] October 2007 (2007-10), XP002532135 Retrieved from the Internet: URL:http://msdn.microsoft.com/en-us/magazi ne/cc163349.aspx> [retrieved on 2009-06-15]
- AGRAWAL A ET AL: "An approach to improve rendering performance of large multiresolution phototextured terrain models using efficient triangle strip generation" GEOSCIENCE AND REMOTE SENSING SYMPOSIUM, 2005. IGARSS '05. PROCEEDINGS . 2005 IEEE INTERNATIONAL SEOUL, KOREA 25-29 JULY 2005, PISCATAWAY, NJ, USA,IEEE, vol. 7, 25 July 2005 (2005-07-25), pages 4984-4987, XP010849595 ISBN: 978-0-7803-9050-8
- CONVERSY AND J-D FEKETE S: "The svgl toolkit: enabling fast rendering of rich 2D graphics", TECHNICAL REPORT-ÉCOLE DES MINES DE NANTES, FRANCE, no. 2/01/info, 1 January 2002 (2002-01-01) , pages 1-11, XP002539626,

## Description

### Technical Field

The present invention relates generally to the field of path rendering. In particular, it relates to the field of stroking of paths.

### Background

Drawing graphics, including e.g. graphical user interfaces on a display includes many operations, such as writing text and drawing icons, paths, shapes, etc. A path is commonly defined as a set of curves and/or straight lines represented by a set of vectors. When a path is to be drawn, a stroke width is commonly applied to create (from the path) an outline of a shape to be filled.

Rendering 2D-graphics from path descriptions may heavily load the central processing unit (CPU). Therefore, hardware acceleration is often used to offload the CPU.

Modem 2D-graphics engines may be very complex. For example, paths to be rendered to e.g. a screen may be allowed to be described as mathematical entities with infinite resolution. This makes it possible for the rendered object (path) to have an appealing look at any scale. Further, the use of transparency (often called alpha channel) can allow objects to blend with the background in a multitude of ways rather than simply cover whatever was drawn before.

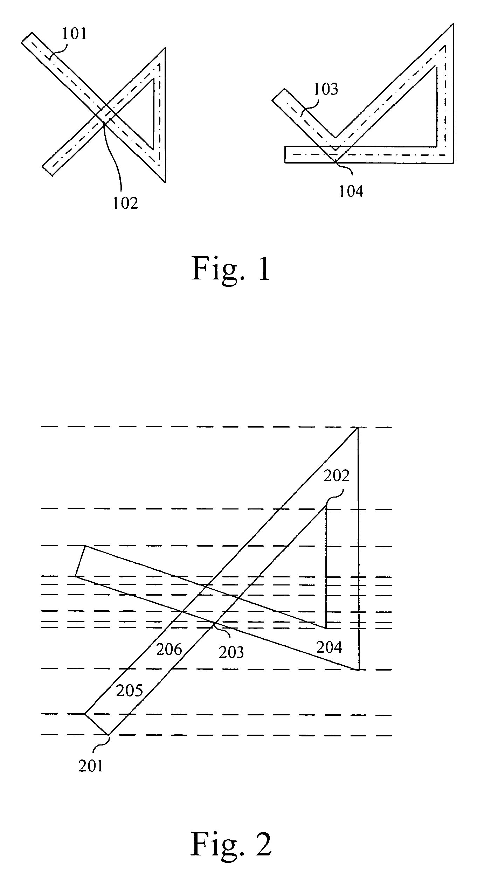

A problem encountered with 2D-graphics engines is revealed when an object is drawn on top of another object in a non-covering blend mode (using transparency). In such scenarios, visual peculiarities may arise if an area is drawn twice. Examples illustrating this phenomenon are shown in Figure 1.

In Figure 1 (left part), a self-intersecting semi-transparent path 101 is stroked with a certain line (stroke) width. The area 102 around the point where the path crosses itself is drawn twice using a semi-transparent color resulting in a darker nuance. In Figure 1 (right part), a semi-transparent path 103, which is not self-intersecting, is stroked with a certain line width. An area 104 around the point where two portions of the path come close to each other is drawn twice using a semi-transparent color, again resulting in a darker nuance. This illustrates that the problem may arise, due to the non-zero line width of the stroked path, also for paths that are not self-intersecting.
One approach to solving the problem of overlapping portions being drawn twice is to perform a complete breakdown of the outline into polygons (e.g. triangles or trapezoids), a so-called tessellation process, followed by a costly step of analysis and removal of overlapping polygons.

To avoid the costly step of analysis and removal of overlapping polygons, a mask may be generated that represent the path stroke. The mask may, for example, be based on the path and the stroke width. Generation of a mask may also involve or be preceded by a tessellation process. The mask may then be used to render the path. This may be achieved by painting e.g. a bounding rectangle of the outline, or an outer hull of the outline in the presence of a mask restricting the areas where the paint operation is applied.

In one approach to tessellation, the process will need to find every self-intersection of the outline. Figure 2 illustrates the result of a scan-line based algorithm utilizing this approach (the Bentley-Ottmann algorithm: Jon Bentley & Thomas Ottmann, "Algorithms for Reporting and Counting Geometric Intersections", IEEE Trans. Computers C-28, pp. 643-647, 1979). All endpoints 201, 202 and intersections 203 of the straight lines building up the outline must be found. Then, horizontal scanlines starting at the bottom of the shape are added at each endpoint and each intersection. This generates a (generally large) number of triangles 204 and/or trapezoids 205, 206. This tessellation approach is very computation expensive. It has a theoretical lower bound on the computational complexity of *n* log(n) where n is the number of segments in the path.

Another approach to tesselation is to allow overlapping polygons (triangles, trapezoids) after the tessellation. Then, the final rendering is done in a two-stage process where a mask is generated from the, potentially overlapping, polygons and the paint is applied using the mask. Thus, no area is painted twice and the problem illustrated in Figure 1 is avoided. Even when using this approach, the tessellation process is still very time consuming and computationally expensive. The complexity is still n log(n). The mask may be generated by the CPU as an image in a memory during the tessellation step. The image may then be fed to a hardware rasterizer as an image. In some circumstances, e.g. for handheld devices, the possibility of feeding images between the CPU and a hardware rasterizer might be limited, for example by memory bandwidth. The mask may be generated in a memory and used in a compositing operation to generate the desired stroke.

To avoid feeding an entire image between the CPU and a hardware rasterizer, polygons representing the mask may be fed to the rasterizer, which may use the polygons to form the mask to be used for rendering the path. Even if this approach considerably reduces the bus load between the CPU and a hardware rasterizer, it is still important (in particular for hand-held devices) that the CPU load from generating the polygons is as low as possible and that the amount of data passed from the CPU to the rasterizer is kept at a minimum.

Thus, there is a need for improved methods and arrangements for rendering a path.

Conversy Stéphane and Fekete Jean-Daniel, "The svgl toolkit: enabling fast rendering of rich 2D graphics", Rapport Interne Ecole des Mines de Nantes, 02/1/INFO, Jan. 2002 discloses a method of stroking a path where Scalable Vector Graphics Library (SVGL) iterates each line segment, computes the rectangular envelope around it and send it to Open Graphics Library (OpenGL) for rendering. More shapes are added between two line envelopes to render the join style.

EP 1840837 A2 discloses a graphics-rendering apparatus where a shape to be swept is arranged at each of the start and end points of a sweep line vector. The most distant points of the shape to be swept are acquired. The computed outline is subjected to triangulation of polygon data. No approach is disclosed for handling joins.

### Summary

It should be emphasized that the term "comprises/comprising" when used in this specification is taken to specify the presence of stated features, integers, steps, or components, but does not preclude the presence or addition of one or more other features, integers, steps, components, or groups thereof.

It is an object of the invention to obviate at least some of the above disadvantages and to provide improved methods and arrangements for rendering a path.

According to a first aspect of the invention, this is achieved by a method of rendering a path, wherein the path comprises at least two straight lines and at least one join connecting two of the at least two straight lines. The method comprises determining a mask associated with a stroke of the path and rendering the path by filling the mask. The method also comprises representing the mask by a plurality of triangles, wherein each of the at least two straight lines are represented by two triangles and the triangles representing two straight lines connected by one join are non-overlapping and creating the mask based on the plurality of triangles. The method is suitable for use in a device having graphics processing capabilities.

In some embodiments, each of the at least one join may be represented by at most one triangle. In these embodiments, the triangles representing two straight lines connected by one join and the at most one triangle representing the one join may be non-overlapping.

Each of the plurality of triangles shares at least two vertices with another one of the plurality of triangles. In some of these embodiments, each of the plurality of triangles, except triangles representing an end of a straight line that is not connected to another straight line, may share two first vertices with a first other one of the plurality of triangles and may share two second vertices with a second other one of the plurality of triangles, at least one of the two second vertices being different from the two first vertices.

In some embodiments, the step of representing the mask by a plurality of triangles may comprise associating each of the at least two straight lines with a quadrangle, wherein the shape of the quadrangle is defined by at least a starting point and an ending point of the associated straight line, a stroke width, and a join shape, and dividing each of the quadrangles into two triangles with a straight line between two opposing vertices of the quadrangle. The join shape may be a mitre join, and no triangle may be used to represent the at least one join. The join shape may be a bevel join, and one triangle may be used to represent each of the at least one join.

The method further comprises defining the plurality of triangles as a sequence of vertices, and the step of creating a mask based on the plurality of triangles comprises creating the mask based on the sequence of vertices. The plurality of triangles may comprise n triangles and the sequence of vertices may comprise n+2 vertices. Each vertex may appear only once in the sequence of vertices.

In some embodiments, the method may further comprise post-processing at least one of the at least one joins with a join shape stamp. In such embodiments, the step of creating the mask may further comprise creating the mask based on the join shape stamp. The join shape stamp may comprise a join stamp triangle, and creating the mask based on the join shape stamp may comprise creating the mask based on an arc between two of the vertices of the join stamp triangle. In some embodiments, the method may further comprise post-processing at least one of an end of a straight line that is not connected to another straight line with a cap shape stamp. In such embodiments, the step of creating the mask may further comprise creating the mask based on the cap shape stamp. The cap shape stamp may comprise first, second and third cap stamp triangles, and creating the mask based on the cap shape stamp may comprise creating the mask based on the third cap stamp triangle, on a first arc between two of the vertices of the first cap stamp triangle, and on a second arc between two of the vertices of the second cap stamp triangle. The join shape stamp and/or cap shape stamp may be a semi-circular shape stamp.

A second aspect of the invention is a computer program product comprising a computer readable medium, having thereon a computer program comprising program instructions, the computer program being loadable into a data-processing unit and adapted to cause the data-processing unit to execute method steps in accordance with the first aspect when the computer program is run by the data-processing unit.

A third aspect of the invention is an arrangement for rendering a path, wherein the path comprises at least two straight lines and at least one join connecting two of the at least two straight lines. The arrangement comprises at least one computational unit adapted to determine a mask associated with a stroke of the path and render the path by filling the mask. The at least one computational unit is further adapted to represent the mask by a plurality of triangles, wherein each of the at least two straight lines are represented by two triangles and the triangles representing two straight lines connected by one join are non-overlapping and create the mask based on the plurality of triangles.

In some embodiments, the at least one computational unit may comprise a central processing unit adapted to determine the mask and represent the mask by the plurality of triangles and a graphics processing unit adapted to create the mask based on the plurality of triangles and render the path by filling the mask.

In some embodiments, the central processing unit may be further adapted to define the plurality of triangles as a sequence of vertices and forward the sequence of vertices to the graphics processing unit, and the graphics processing unit may be adapted to create the mask based on the sequence of vertices.

A fourth aspect of the invention is an electronic device comprising the arrangement according to the third aspect and a graphical interface.

In some embodiments, the third and fourth aspects of the invention may additionally have features identical with or corresponding to any of the various features as explained above for the first aspect of the invention.

One of the advantages of embodiments of the invention is that a low-complexity algorithm is provided which can be used to generate triangles for a rasterizer stage. This algorithm, having a worst case computational complexity of *O(n+k),* where k is the number of joins and/or caps, may replace an algorithm with complexity O(n log(n)).

Another advantage of embodiments of the invention is that the triangles themselves (or parameters defining them) may be fed to a rasterizer instead of a mask image. The rasterizer may be a graphics processing unit (GPU). In the rasterizer, the triangles may be used to build a mask. Thus, less data may need to be sent between a CPU and the rasterizer.

Thus, an advantage of embodiments of the invention is less CPU load when the tessellation algorithm is simplified and the mask generation is moved to the rasterizer. Further, an advantage of embodiments of the invention is less bus load when vertices are sent from the CPU to the GPU in a most efficient (i.e. compact) format.

Another advantage of embodiments of the invention is better graphics performance and less CPU load, CPU-GPU communication, and memory bus load.

Another advantage of embodiments of the invention is that it may be possible to balance the load between CPU and GPU. If, for example, the GPU is the constraining resource, some operations can be performed by the CPU, and vice versa, resulting in maximum throughput.

### Brief Description of the Drawings

Further objects, features and advantages of the invention will appear from the following detailed description of embodiments of the invention, with reference being made to the accompanying drawings, in which:
Fig. 1 is a schematic illustration of example path strokes;
Fig. 2 is a schematic illustration showing the result of an example tessellation algorithm;
Fig. 3 is a schematic illustration showing the result of an example tessellation algorithm according to some embodiments of the invention;
Fig. 4 is a schematic illustration showing the result of an example tessellation algorithm according to some embodiments of the invention;
Fig. 5A is a schematic illustration showing the result of example join and cap stamping according to some embodiments of the invention;
Fig. 5B is a schematic illustration showing join and cap stamping using the Loop-Blinn algorithm according to some embodiments of the invention;
Fig. 6 is a flow diagram illustrating example method steps according to some embodiments of the invention;
Fig. 7 is a block diagram illustrating an image rendering pipe-line according to some embodiments of the invention; and
Fig. 8 is a schematic illustration of an example device that may comprise arrangements according to some embodiments of the invention.

### Detailed Description

In the following, embodiments of the invention will be described in which a path is rendered. In particular, embodiments will be described which are suitable for rendering paths by path stroking. According to embodiments of the invention, the path may be rendered, for example, on a graphical interface, on a screen, in an off-screen image, or as a texture for subsequent use in e.g. a 3D-game.

Embodiments of the invention provide for a tessellation algorithm with low (linear) computational complexity. This may lower the CPU load. Further, embodiments of the invention provide for a tessellation that enables the polygons (e.g. triangles) to be defined by a sequence of vertices. According to some embodiments of the invention the length of this sequence may be kept at a minimum due to properties of the tessellation algorithm. By providing such a compact definition of the polygons, and by letting a rasterizer create a mask (to be filled for rendering the path) from the sequence of vertices, the amount of data that need to be sent from a CPU to a rasterizer (e.g. an OpenGL ES 2.x compatible GPU or similar) is minimized.

Embodiments of the invention build on the two-stage process of first creating a mask for the path to be rendered and then applying paint based on the mask.

In embodiments of the invention the hardware rasterizer is fed a list (sequence) of triangle vertices. From this sequence, the rasterizer may build a mask locally (e.g. in the stencil buffer). By using this approach rather than feeding a mask image to the rasterizer, a heavy computational burden is moved from the CPU to the rasterizer and the bus load is kept to a minimum. In addition, embodiments of the invention provide methods and arrangements for keeping the list as short as possible to further decrease the bus load.

For a particular path, an outline may be defined by the path, a certain line width (or stroke width), mitre joins, and square or butt end caps. It may be observed that any path, whether closed or open (i.e. not having free end points and having free end points respectively), which is stroked inside its outline can be divided into a sequence of (possibly overlapping) triangles ready for processing. This may be achieved while parsing the path, segment by segment, from the starting point to the end point. This results in a tessellation algorithm with linear time complexity.

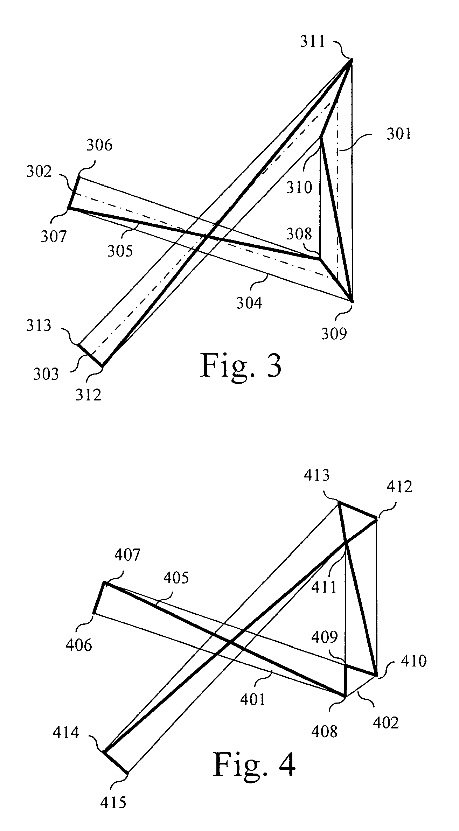

Figure 3 illustrates the result of such an algorithm. The path to be rendered 301 is parsed from its starting point 302 to its ending point 303. A butt end cap 306-307, a mitre join 308-309 and the stroke width defines the polygon (quadrangle) 304 for the first segment of the path. Similarly, quadrangles are defined for the other path segments. Each quadrangle may be divided into two triangles by an incision 305 between opposing vertices. The triangles may then be defined by a sequence of vertices 306-307-308-309-310-311-312-313. According to some embodiments of the invention, the incisions 305 of the different quadrangles are coordinated so that the sequence of vertices becomes as short as possible. In the example shown in Figure 3, the sequence would be longer if, for example, the incision of the quadrangle of the second path segment had been laid between vertices 308 and 311 instead of between vertices 309 and 310.

Thus, the sequence 306-307-308-309-310-311-312-313 uniquely identifies all the constituent triangles in a minimal form. Generally put, the minimal representation of the constituent triangles of a path is a sequence of *m*+2 vertices if there are *m* constituent triangles.

It should also be noted in Figure 3 that the number of constituent quadrangles are much less than was the case with the scan-line algorithm illustrated in Figure 2.

Similar algorithms may be applied when a stroked path has other properties than mitre joins and butt end (or square) caps. A stroked path may, for example have bevel or rounded joins. Similarly, a stroked path may, for example have rounded caps.

Figure 4 illustrates the result of such an algorithm. As before, the path to be rendered is parsed from its starting point to its ending point. However, in this case a butt end cap, a bevel join and the stroke width define the quadrangle 401 for the first segment of the path. The join is completed by a triangle 402. Quadrangles for the other path segments and triangles for the other joins are defined in a similar way. As before, each quadrangle may be divided into two triangles by an incision 405 between opposing vertices. The resulting triangles may then be defined by a sequence of vertices 406-415. It may be noted that the vertex 411 will appear twice in the sequence.

If the stroked path has rounded caps and/or joins the same algorithm may be used with an additional post-processing procedure. In the post-processing, all the caps and/or joins that have rounded caps (k in total) may be stamped by a semi-circular shape (e.g. a tessellated circle). The triangle vertex list may be initiated from a stroked path with butt end caps and bevel joins. Such a shape can generally be used as the starting point for any join/cap-style combination. The rounded joins and caps may then be added to the triangle vertex list. This may be achieved, for example, by appending copies of pre-computed triangle lists in the form of a semi-circular stamp. The complexity is however still linear in time.

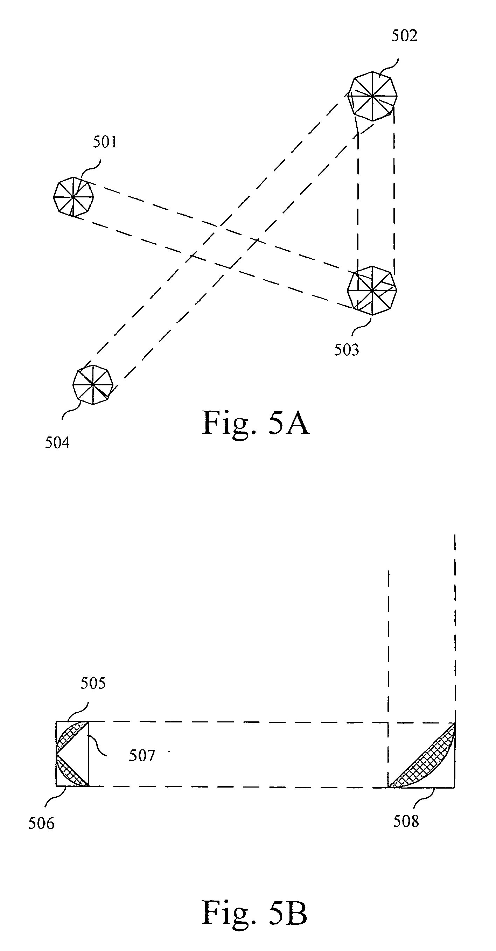

Figure 5A illustrates the stamps 501-504 of such a post-processing for the worst case of rounded joins and caps.

Figure 5B illustrates an alternative join and cap stamping using the Loop-Blinn algorithm as disclosed in Charles Loop and Jim Blinn, "Resolution independent curve rendering using programmable graphics hardware", Siggraph Proceedings, pp. 1000-1010, Los Angeles, 2005. This alternative may be used on some programmable graphics hardware, such as for example OpenGL ES 2.X compliant graphics processing units (GPU). With the Loop-Blinn algorithm, semi-circular joins and/or caps may be produced at little overhead cost.

In Figure 5B example operations based on the Loop-Blinn algorithm are illustrated. In this example, the Loop-Blinn algorithm operates to create join and/or cap stamp triangles 505, 506, 507, 508. For the case of a join, only part (shaded part in Figure 5B) of the join stamp triangle 508 will then be filled, and hence the mask is created based on an arc between two of the vertices of the join stamp triangle. For the case of a cap, only part (shaded part in Figure 5B) of the cap stamp triangles 505 and 506 will then be filled along with the cap stamp triangle 507, and hence the mask is created based on the cap stamp triangle 507, on a first arc between two of the vertices of the cap stamp triangle 505, and on a second arc between two of the vertices of the cap stamp triangle 506.

According to embodiments of the invention a list of triangle vertices is thus obtained in a compact format. This list is suitable for feeding to hardware, such as a GPU, which can use the triangle vertex list to create the mask (for example in its stencil buffer) before applying paint to the mask area. The mask may be created on-the-fly in the GPU.

Thus, according to embodiments of the invention the mask may be represented by a plurality of triangles. Each of the straight lines (path segments) is represented by two triangles and the triangles representing two straight lines that are connected by a join are non-overlapping. In some embodiments, a join is a mitre join and no extra join triangle is required. In other embodiments, a join is a bevel join and an extra join triangle is required to complete the mask representation. The triangles representing two straight lines connected by a join and the join triangle are non-overlapping.

Each of the triangles shares at least two vertices with another triangle. In fact each triangle may share two vertices with one triangle and two vertices (not both identical to the two vertices shared with the one triangle) with another triangle, except triangles representing an end of a straight line that is not connected to another straight line (in Figure 3, the triangles defined by 306-307-308-306 and 311-312-131-311).

The properties, according to some embodiments, of non-overlapping triangles associated with a join and of vertex-sharing between triangles provide for that the representation as a sequence of vertices may be as short as possible. It should be noted, though, that triangles may very well overlap according to embodiments of the invention, for example when a path is self-intersecting.

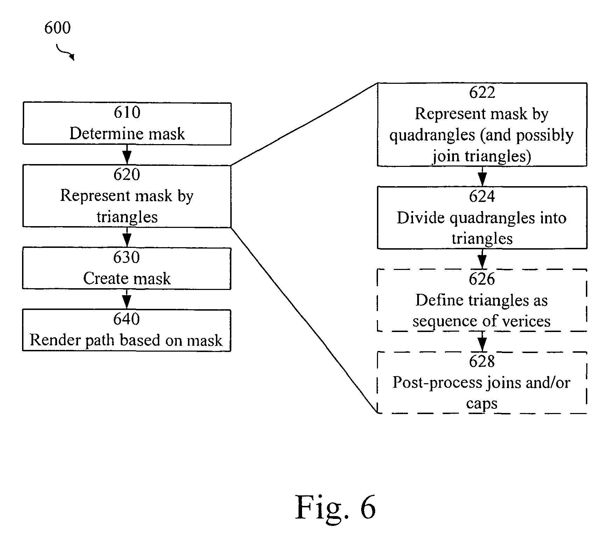

Figure 6 illustrates a method 600 of rendering a path according to some embodiments of the invention. In step 610, a mask is determined for the path. The mask may, for example, be defined based on the path, a stroke width, join shapes and cap shapes. In step 620, the mask is represented by triangles (tessellated). Steps 610 and 620 may, for example, be carried out in a CPU of an image-rendering pipe-line. In some embodiments, the triangles or parameters defining the triangles are then fed to a rasterization unit, such as a GPU. Then, in step 630, the mask is created based on the data representing the triangles, and the path is rendered by filling an area enclosing the outline in the presence of the mask in step 640.

As explained above, the step 620 of representing the mask by triangles may comprise representing each segment of the path by a quadrangle (sub-step 622) and divide the quadrangles into triangles (sub-step 624). If the joins are not mitre joins but, for example, bevel joins sub-step 622 may also comprise completing the joins with a join triangle. The triangles may be represented by a sequence of vertices as explained above and as shown by optional sub-step 626. If the joins and/or caps are not mitre joins and butt end caps but, for example, rounded joins and caps, then each such join and cap is stamped with its respective shape in a post-processing step represented by optional sub-step 628. The post-processing step may involve the Loop-Blinn algorithm as explained above in connection to Figure 5B.

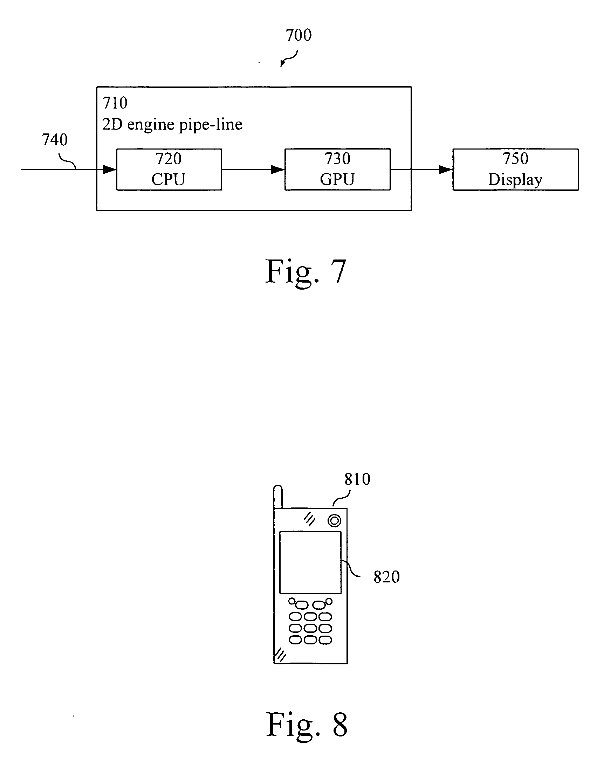

Figure 7 shows a block diagram of an example arrangement 700 according to some embodiments of the invention. The arrangement 700 may, for example, be adapted to perform method steps as described in connection to Figure 6.

The arrangement 700 may comprise a 2D-engine image rendering pipe-line 710, which in turn comprises one or more computational units. The computational units may, for example comprise a CPU 720 and a GPU 730. At 740, the path is input to the CPU 720, which may perform various operations on the path. For example, the CPU 720 may determine a mask for stroking the path, tessellate the mask, and represent the tessellated mask by a sequence of vertices as explained above. The sequence is subsequently input to a rasterizing block, such as the GPU 730. The rasterizing block transforms the sequence representation of the mask to a mask image (e.g. pixels). The rasterizing block fills the mask and renders the path on a graphical interface, such as a display 750. It is to be noted that the display 750 (or other graphical interface) need not be part of the arrangement.

The described embodiments of the invention and their equivalents may be realised in software or hardware or a combination thereof. They may be performed by general-purpose circuits associated with or integral to a communication device, such as digital signal processors (DSP), central processing units (CPU), co-processor units, graphics processing units (GPU), or by specialized circuits such as for example application-specific integrated circuits (ASIC). All such forms are contemplated to be within the scope of the invention.

The invention may be embodied within an electronic apparatus comprising circuitry/logic/arrangements or performing methods according to any of the embodiments of the invention. The electronic apparatus may, for example, be a portable or handheld mobile radio communication equipment, a mobile radio terminal, a mobile telephone, a communicator, an electronic organizer, a smartphone, a barcode scanner, a computer, or a mobile gaming device.

Figure 8 illustrates an example mobile terminal 810 comprising image processing arrangement according to embodiments of the invention. The mobile terminal 810 may be connected, through a radio link, to a base station site.

The mobile terminal 810 is illustrated as a mobile telephone in a schematic front view. The mobile terminal 810 may comprise a display 820, a keypad, a loudspeaker, and a microphone, which together provides a man-machine interface for operating the mobile terminal 810. The mobile terminal may further comprise an image-acquiring device, such as a camera.

According to some embodiments of the invention, a computer program product comprises a computer readable medium such as, for example, a diskette or a CD-ROM. The computer readable medium may have stored thereon a computer program comprising program instructions. The computer program may be loadable into a data-processing unit, which may, for example, be comprised in a mobile terminal. When loaded into the data-processing unit, the computer program may be stored in a memory associated with or integral to the data-processing unit. According to some embodiments, the computer program may, when loaded into and run by the data-processing unit, cause the data-processing unit to execute method steps according to, for example, the method shown in Figure 6.

Embodiments of the invention provide a simple algorithm, which can be used to generate triangles. The triangles themselves may be fed to a rasterizer and used therein to build a mask on-the-fly, for example in a stencil buffer rather than being used by the CPU to create a mask image in memory which is then fed to the rasterizer. The rasterizer stage may comprise hardware or software. It may, for example, be a GPU.

Some advantages of embodiments of the invention are less CPU load (when the tessellation algorithm is simplified and the mask generation is moved to the rasterizer), and less bus load (when vertices are sent from the CPU to the GPU rather than an a mask image). Thus, better graphics performance and less CPU and memory bus load may be provided for according to embodiments of the invention.

The invention has been described herein with reference to various embodiments. However, a person skilled in the art would recognize numerous variations to the described embodiments that would still fall within the scope of the invention. For example, the method embodiments described herein describes example methods through method steps being performed in a certain order. However, it is recognized that these sequences of events may take place in another order without departing from the scope of the invention. Furthermore, some method steps may be performed in parallel even though they have been described as being performed in sequence.

In the same manner, it should be noted that in the description of embodiments of the invention, the partition of functional blocks into particular units is by no means limiting to the invention. Contrarily, these partitions are merely examples. Functional blocks described herein as one unit may be split into two or more units. In the same manner, functional blocks that are described herein as being implemented as two or more units may be implemented as a single unit without departing from the scope of the invention.

Hence, it should be understood that the limitations of the described embodiments are merely for illustrative purpose and by no means limiting. Instead, the invention is construed to be limited by the appended claims and all reasonable equivalents thereof.

## Claims

1. A method of stroking a path, suitable for use in a device having graphics processing capabilities, wherein the path comprises at least first, second and third straight lines and at least one join connecting the first and second straight lines, wherein the straight lines have a predetermined width, comprising:
representing (620) a stroke of the path by a plurality of triangles,
wherein each of the straight lines are represented by two triangles,
wherein the triangles representing the first and second straight lines connected by one join are non-overlapping,
wherein at least one of the two triangles representing the third straight line overlaps at least one of the triangles representing the first and second straight lines connected by one join, and
wherein each of the plurality of triangles shares at least two vertices with another one of the plurality of triangles;
defining (626) the plurality of triangles as a sequence of vertices;
creating (630) a mask associated with the stroke of the path based on the sequence of vertices; and
stroking (640) the path by filling the mask.

2. The method of claim 1, wherein each of the at least one join is represented by at most one triangle and the triangles representing the first and second straight lines connected by one join and the at most one triangle representing the one join are non-overlapping.

3. The method of any of claims 1 through 2, wherein each of the plurality of triangles, except triangles representing an end of a straight line that is not connected to another straight line, share two first vertices with a first other one of the plurality of triangles and share two second vertices with a second other one of the plurality of triangles, one of the two second vertices being different from each of the two first vertices.

4. The method of any of claims 1 through 3, wherein the step of representing the stroke of the path by a plurality of triangles comprises:
associating (622) each of the straight lines with a quadrangle, wherein the shape of the quadrangle is defined by at least a starting point and an ending point of the associated straight line, a stroke width, and a join shape; and
dividing (624) each of the quadrangles into two triangles with a straight line between two opposing vertices of the quadrangle.

5. The method of claim 4, wherein the join shape is a mitre join, and no triangle is used to represent the at least one join.

6. The method of claim 4, wherein the join shape is a bevel join, and one triangle (402) is used to represent each of the at least one join.

7. The method of any of claims 1 through 6, wherein the plurality of triangles comprises *m* triangles and the sequence of vertices comprises *m*+2 vertices.

8. The method of any of claims 1 through 7, wherein each of the vertices appears only once in the sequence of vertices.

9. The method of any of claims 1 through 8, further comprising:
post-processing (628) at least one of the at least one joins with a join shape stamp (502, 503, 508), and wherein the step of creating the mask further comprises creating the mask based on the join shape stamp.

10. The method of claim 9, wherein the join shape stamp comprises a join stamp triangle (508), and wherein creating the mask based on the join shape stamp comprises creating the mask based on an arc between two of the vertices of the join stamp triangle.

11. The method of any of claims 9 through 10, wherein the join shape stamp is a semi-circular shape stamp.

12. The method of any of claims 1 through 11, further comprising:
post-processing (628) at least one of an end of a straight line that is not connected to another straight line with a cap shape stamp (501, 504, 505, 506, 507), and wherein the step of creating the mask further comprises creating the mask based on the cap shape stamp.

13. The method of claim 12, wherein the cap shape stamp comprises first, second and third cap stamp triangles (505, 506, 507), and wherein creating the mask based on the cap shape stamp comprises creating the mask based on the third cap stamp triangle, on a first arc between two of the vertices of the first cap stamp triangle, and on a second arc between two of the vertices of the second cap stamp triangle.

14. The method of any of claims 12 through 13, wherein the cap shape stamp is a semi-circular shape stamp.

15. A computer program product comprising a computer readable medium, having thereon a computer program comprising program instructions, the computer program being loadable into a data-processing unit and adapted to cause the data-processing unit to execute method steps according to any of claims 1 to 14 when the computer program is run by the data-processing unit.

16. A system for stroking a path, wherein the path comprises at least first, second and third straight lines and at least one join connecting the first and second straight lines, wherein the straight lines have a predetermined width, comprising:
a central processing unit (720) adapted to:
represent a stroke of the path by a plurality of triangles,
wherein each of the straight lines are represented by two triangles,
wherein the triangles representing the first and second straight lines connected by one join are non-overlapping,
wherein at least one of the two triangles representing the third straight line overlaps at least one of the triangles representing the first and second straight lines connected by one join, and
wherein each of the plurality of triangles shares at least two vertices with another one of the plurality of triangles;
define the plurality of triangles as a sequence of vertices; and
output the sequence of vertices; and
a graphics processing unit (730) adapted to:
receive the sequence of vertices as an input;
create a mask associated with the stroke of the path based on the sequence of vertices; and
stroke the path by filling the mask.

17. The system of claim 16, wherein the central processing unit is further adapted to post-process at least one of the at least one joins with a join shape stamp and forward parameters defining the join shape stamp to the graphics processing unit.

18. The system of claim 17, wherein the graphics processing unit is further adapted to create the mask based on the parameters defining the join shape stamp.

19. The system of any of claims 16 through 18, wherein the central processing unit is further adapted to post-process at least one of an end of a straight line that is not connected to another straight line with a cap shape stamp and forward parameters defining the cap shape stamp to the graphics processing unit.

20. The system of claim 19, wherein the graphics processing unit is further adapted to create the mask based on the parameters defining the the cap shape stamp.

21. An electronic device (810) comprising:
the system according to any of the claims 16 through 20; and
a graphical interface (750, 820).

## Patentansprüche

1. Verfahren zum Nachziehen eines Pfads, geeignet zur Verwendung in einer Vorrichtung mit Grafikverarbeitungsfähigkeiten, wobei der Pfad mindestens erste, zweite und dritte gerade Linien und mindestens eine Verbindung umfasst, welche die ersten und zweiten geraden Linien verbindet, wobei die geraden Linien eine vorbestimmte Breite aufweisen, umfassend:
Darstellen (620) eines Strichs des Pfads durch eine Mehrzahl von Dreiecken,
wobei jede der geraden Linien durch zwei Dreiecke dargestellt wird,
wobei die Dreiecke, welche die ersten und zweiten geraden Linien darstellen, die durch eine Linie verbunden sind, nicht überlappend sind,
wobei mindestens eines der zwei Dreiecke, welche die dritte Linie darstellen, mindestens eines der Dreiecke überlappt, das die ersten und zweiten geraden Linien darstellt, die durch eine Verbindung verbunden sind, und
wobei jedes der Mehrzahl von Dreiecken sich mindestens zwei Eckpunkte mit einem anderen der Mehrzahl von Dreiecken teilt;
Definieren (626) der Mehrzahl von Dreiecken als eine Folge von Eckpunkten;
Erstellen (630) einer Maske, die mit dem Strich des Pfades verbunden ist, basierend auf der Folge von Eckpunkten; und
Nachziehen (640) des Pfads durch Füllen der Maske.

2. Verfahren nach Anspruch 1, wobei jede der mindestens einen Verbindung durch höchstens ein Dreieck dargestellt wird, und die Dreiecke, welche die ersten und zweiten geraden Linien darstellen, die durch eine Verbindung verbunden sind, und das höchstens eine Dreieck, das die eine Verbindung darstellt, nicht überlappend sind.

3. Verfahren nach einem der Ansprüche 1 bis 2, wobei jedes der Mehrzahl von Dreiecken mit Ausnahme von Dreiecken, die ein Ende einer geraden Linie darstellen, die nicht mit einer anderen geraden Linie verbunden ist, sich zwei erste Eckpunkte mit einem ersten anderen der Mehrzahl von Dreiecken teilt und sich zwei zweite Eckpunkte mit einem zweiten anderen der Mehrzahl von Dreiecken teilt, wobei einer der zwei zweiten Eckpunkte von jedem der zwei ersten Eckpunkte verschieden ist.

4. Verfahren nach einem der Ansprüche 1 bis 3, wobei der Schritt des Darstellens des Strichs des Pfads durch eine Mehrzahl von Dreiecken umfasst:
Verbinden (622) jeder der geraden Linien mit einem Viereck, wobei die Form des Vierecks durch mindestens einen Ausgangspunkt und einen Endpunkt der verbundenen geraden Linie, eine Strichbreite und eine Verbindungsform definiert ist; und
Teilen (624) jedes der Vierecke in zwei Dreiecke mit einer geraden Linie zwischen zwei gegenüberliegenden Eckpunkten des Vierecks.

5. Verfahren nach Anspruch 4, wobei die Verbindungsform eine Gehrungsverbindung ist, und kein Dreieck verwendet wird, um die mindestens eine Verbindung darzustellen.

6. Verfahren nach Anspruch 4, wobei die Verbindungsform eine Schrägverbindung ist, und ein Dreieck (402) verwendet wird, um jede der mindestens einen Verbindung darzustellen.

7. Verfahren nach einem der Ansprüche 1 bis 6, wobei die Mehrzahl von Dreiecken m Dreiecke umfasst, und die Folge von Eckpunkten m + 2 Eckpunkte umfasst.

8. Verfahren nach einem der Ansprüche 1 bis 7, wobei jeder der Eckpunkte nur einmal in der Folge von Eckpunkten auftritt.

9. Verfahren nach einem der Ansprüche 1 bis 8, ferner umfassend:
Nachbearbeiten (628) mindestens einer der mindestens einen Verbindung mit einem Verbindungsformstempel (502, 503, 508), und wobei der Schritt des Erstellens der Maske ferner ein Erstellen der Maske basierend auf dem Verbindungsformstempel umfasst.

10. Verfahren nach Anspruch 9, wobei der Verbindungsformstempel ein Verbindungsstempeldreieck (508) umfasst, und wobei das Erstellen der Maske basierend auf dem Verbindungsformstempel ein Erstellen der Maske basierend auf einem Bogen zwischen zweien der Eckpunkte des Verbindungsstempeldreiecks umfasst.

11. Verfahren nach einem der Ansprüche 9 bis 10, wobei der Verbindungsformstempel ein halbkreisförmiger Formstempel ist.

12. Verfahren nach einem der Ansprüche 1 bis 11, ferner umfassend:
Nachbearbeiten (628) mindestens eines von einem Ende einer geraden Linie, die nicht mit einer anderen geraden Linie verbunden ist, mit einem Kappenformstempel (501, 504, 505, 506, 507), und wobei der Schritt des Erstellens der Maske ferner ein Erstellen der Maske basierend auf dem Kappenformstempel umfasst.

13. Verfahren nach Anspruch 12, wobei der Kappenformstempel erste, zweite und dritte Kappenstempeldreiecke (505, 506, 507) umfasst, und wobei das Erstellen einer Maske basierend auf dem Kappenformstempel ein Erstellen der Maske basierend auf dem dritten Kappenstempeldreieck, auf einem ersten Bogen zwischen zweien der Eckpunkte des ersten Kappenstempeldreiecks und einem zweiten Bogen zwischen zweien der Eckpunkte des zweiten Kappenstempeldreiecks umfasst.

14. Verfahren nach einem der Ansprüche 12 bis 13, wobei der Kappenformstempel ein halbkreisförmiger Formstempel ist.

15. Computerprogrammprodukt, umfassend ein computerlesbares Medium, das ein Computerprogramm darauf aufweist, das Programmanweisungen umfasst, wobei das Computerprogramm in eine Datenverarbeitungseinheit geladen werden kann und so ausgelegt ist, dass es die Datenverarbeitungseinheit veranlasst, Verfahrensschritte nach einem der Ansprüche 1 bis 14 auszuführen, wenn das Computerprogramm durch die Datenverarbeitungseinheit ausgeführt wird.

16. System zum Nachziehen eines Pfads, wobei der Pfad mindestens erste, zweite und dritte gerade Linien und mindestens eine Verbindung umfasst, welche die ersten und zweiten geraden Linien verbindet, wobei die geraden Linien eine vorbestimmte Breite aufweisen, umfassend:
eine zentrale Verarbeitungseinheit (720), die ausgelegt ist zum:
Darstellen eines Strichs des Pfads durch eine Mehrzahl von Dreiecken,
wobei jede der geraden Linien durch zwei Dreiecke dargestellt wird,
wobei die Dreiecke, welche die ersten und zweiten geraden Linien darstellen, die durch eine Verbindung verbunden sind, nicht überlappend sind,
wobei mindestens eines der zwei Dreiecke, welche die dritte Linie darstellen, mindestens eines der Dreiecke überlappt, das die ersten und zweiten geraden Linien darstellt, die durch eine Verbindung verbunden sind, und
wobei jedes der Mehrzahl von Dreiecken sich mindestens zwei Eckpunkte mit einem anderen der Mehrzahl von Dreiecken teilt;
Definieren der Mehrzahl von Dreiecken als eine Folge von Eckpunkten;
Ausgeben der Folge von Eckpunkten; und
eine Grafikverarbeitungseinheit (730), die ausgelegt ist zum:
Empfangen der Folge von Eckpunkten als eine Eingabe;
Erstellen einer Maske, die mit dem Strich des Pfades verbunden ist, basierend auf der Folge von Eckpunkten; und
Nachziehen des Pfads durch Füllen der Maske.

17. System nach Anspruch 16, wobei die zentrale Verarbeitungseinheit ferner so ausgelegt ist, dass sie mindestens eine der mindestens einen Verbindung mit einem Verbindungsformstempel nachbearbeitet und Parameter, die den Verbindungsformstempel definieren, an die Grafikverarbeitungseinheit weiterleitet.

18. System nach Anspruch 17, wobei die Grafikverarbeitungseinheit ferner so ausgelegt ist, dass sie die Maske basierend auf den Parametern erstellt, die den Verbindungsformstempel definieren.

19. System nach einem der Ansprüche 16 bis 18, wobei die zentrale Verarbeitungseinheit ferner so ausgelegt ist, dass sie mindestens eines von einem Ende einer geraden Linie, die nicht mit einer anderen geraden Linie verbunden ist, mit einem Kappenformstempel nachbearbeitet und Parameter, die den Kappenformstempel definieren, an die Grafikverarbeitungseinheit weiterleitet.

20. System nach Anspruch 19, wobei die Grafikverarbeitungseinheit ferner so ausgelegt ist, dass sie die Maske basierend auf den Parametern erstellt, die den Kappenformstempel definieren.

21. Elektronische Vorrichtung (810), umfassend:
das System nach einem der Ansprüche 16 bis 20; und
eine grafische Schnittstelle (750, 820).

## Revendications

1. Procédé de rendu de course d'un chemin, approprié à une utilisation dans un dispositif ayant des capacités de traitement graphique, dans lequel le chemin comprend au moins une première, seconde et troisième ligne droite et au moins un joint raccordant la première et la seconde ligne droite, dans lequel les lignes droites ont une largeur prédéterminée, comprenant de :
représenter (620) une course du chemin par une pluralité de triangles,
dans lequel chacune des lignes droites sont représentées par deux triangles,
dans lequel les triangles représentant la première et la seconde ligne droite raccordées par un joint ne se superposent pas,
dans lequel au moins un des deux triangles représentant la troisième ligne droite se superpose au moins à un des triangles représentant la première et la seconde ligne droite raccordées par un joint, et
dans lequel chacun de la pluralité de triangle partage au moins deux sommets avec un autre de la pluralité de triangles ;
définir (626) la pluralité de triangles comme une séquence de sommets ;
créer (630) un masque associé à la course du chemin sur la base de la séquence de sommets ; et
rendre une course (640) du chemin en remplissant le masque.

2. Procédé selon la revendication 1, dans lequel chacun d'au moins un joint est représenté par au moins un triangle et les triangles représentant la première et la seconde ligne droite raccordées par un joint et au plus un triangle représentant un joint ne se superposent pas.

3. Procédé selon une quelconque des revendications 1 à 2, dans lequel chacun de la pluralité de triangles, excepté les triangles représentant une extrémité d'une ligne droite qui n'est pas raccordée à une autre ligne droite, partagent deux premiers sommets avec un premier autre de la pluralité de triangles et partagent deux seconds sommets avec un second autre de la pluralité de triangles, un des deux seconds sommets étant différent de chacun des deux premiers sommets.

4. Procédé selon une quelconque des revendications 1 à 3, dans lequel l'étape de représentation de la course du chemin par une pluralité de triangles comprend de :
associer (622) chacune des lignes droites à un quadrilatère, dans lequel la forme du quadrilatère est définie par au moins un point de début et un point de fin de la ligne droite associée, une largeur de course et une forme de joint ; et
diviser (624) chacun des quadrilatères en deux triangles avec une ligne droite entre deux sommets opposés du quadrilatère.

5. Procédé selon la revendication 4, dans lequel la forme de joint est un joint à onglet et aucun triangle n'est utilisé pour représenter au moins un joint.

6. Procédé selon la revendication 4, dans lequel la forme de joint est un joint biseauté et un triangle (402) est utilisé pour représenter chacun de au moins un joint.

7. Procédé selon une quelconque des revendications 1 à 6, dans lequel la pluralité de triangles comprend m triangles et la séquence de sommets comprend m+2 sommets.

8. Procédé selon une quelconque des revendications 1 à 7, dans lequel chacun des sommets apparait seulement une fois dans la séquence de sommets.

9. Procédé selon une quelconque des revendications 1 à 8, comprenant en outre de :
post-traiter (628) au moins un des au moins un joints avec un poinçon de formage de joint (502, 503, 508) et dans lequel l'étape de création du masque comprend en outre de créer le masque sur la base du poinçon de formage de joint.

10. Procédé selon la revendication 9, dans lequel le poinçon de formage de joint comprend un triangle de poinçon de joint (508) et dans lequel créer le masque sur la base du poinçon de formage de joint comprend de créer le masque sur la base d'un arc entre deux des sommets du triangle de poinçon de joint.

11. Procédé selon une quelconque des revendications 9 à 10, dans lequel le poinçon de formage de joint est un poinçon de forme semi-circulaire.

12. Procédé selon une quelconque des revendications 1 à 11, comprenant en outre de :
post-traiter (628) au moins une extrémité d'une ligne droite qui n'est pas raccordée à une autre ligne droite avec un poinçon de formage de chapeau (501, 504, 505, 506, 507), et dans lequel l'étape de création de masque comprend en outre de créer le masque sur la base du poinçon de formage de chapeau.

13. Procédé selon la revendication 12, dans lequel le poinçon de formage de chapeau comprend un premier, second et troisième triangle de poinçon de chapeau (505, 506, 507), et dans lequel créer le masque sur la base du poinçon de formage de chapeau comprend de créer le masque sur la base du troisième triangle de poinçon de chapeau, sur un premier arc entre deux des sommets du premier triangle de poinçon de chapeau, et sur un second arc entre deux des sommets du second triangle de poinçon de chapeau.

14. Procédé selon une des revendications 12 à 13, dans lequel le poinçon de formage de chapeau est un poinçon de forme semi-circulaire.

15. Produit de programme informatique comprenant un support lisible par ordinateur, renfermant un programme informatique comprenant des instructions de programme, le programme informatique étant chargeable dans une unité de traitement de données et adapté pour amener l'unité de traitement de données à exécuter des étapes de procédé selon une quelconque des revendications 1 à 14 quand le programme informatique est exécuté par l'unité de traitement de données.

16. Système de rendu de course d'un chemin, dans lequel le chemin comprend au moins une première, seconde et troisième ligne droite et au moins un joint raccordant la première et la seconde ligne droite, dans lequel les lignes droites ont une largeur prédéterminée, comprenant :
une unité de traitement centrale (720) adaptée pour :
représenter une course du chemin par une pluralité de triangles,
dans lequel chacune des lignes droite est représentée par deux triangles,
dans lequel les triangles représentant la première et la seconde ligne droite raccordées par un joint ne se superposent pas,
dans lequel au moins un des deux triangles représentant la troisième ligne droite se superpose à au moins un des triangles représentant la première et la seconde ligne droite raccordées par un joint, et
dans lequel chacun de la pluralité de triangles partage au moins deux sommets avec un autre de la pluralité de triangles ;
définie la pluralité de triangles comme une séquence de sommets ; et
délivrer la séquence des sommets ; et
une unité de traitement graphique (730) adaptée pour :
recevoir la séquence de sommets comme une entrée ;
créer un masque associé à la course du chemin sur la base de la séquence de sommets ; et
rendre la course du chemin en remplissant le masque.

17. Système selon la revendication 16, dans lequel l'unité de traitement centrale est en outre adaptée pour post-traiter au moins un d'au moins un joint avec un poinçon de formage de joint et acheminer des paramètres définissant le poinçon de formage de joint vers l'unité de traitement graphique.

18. Système selon la revendication 17, dans lequel l'unité de traitement graphique est en outre adaptée pour créer le masque sur la base des paramètres définissant le poinçon de formage de joint.

19. Système selon une quelconque des revendications 16 à 18, dans lequel l'unité de traitement central est en outre adaptée pour post-traiter au moins une d'une extrémité d'une ligne droite qui n'est pas raccordée à une autre ligne droite avec un poinçon de formage de chapeau et acheminer des paramètres définissant le poinçon de formage de chapeau vers l'unité de traitement graphique.

20. Système selon la revendication 19, dans lequel l'unité de traitement graphique est en outre adaptée pour créer le masque sur la base des paramètres définissant le poinçon de formage de chapeau.

21. Dispositif électronique (810) comprenant :
le système selon une quelconque des revendications 16 à 20 ; et
une interface graphique (750, 820).
